# EUROPEAN PATENT SPECIFICATION

(11) **EP 2 116 738 B1**
(45) Date of publication and mention of the grant of the patent: **06.04.2011**
(21) Application number: 08008562.4
(22) Date of filing: 07.05.2008
(51) Int. Cl.: F16F 9/36, F16J 15/32

(54) **Sealing arrangement**
Dichtungsanordnung
Dispositif d'étancheïté

(43) Date of publication of application: 11.11.2009
(73) Proprietor: Carl Freudenberg KG, 69469 Weinheim (DE)
(72) Inventor: Watling, Simon, Northumberland NE24 2PR (GB)

(56) References cited:
- EP-A- 0 563 439
- EP-A- 1 729 045
- DE-A1- 3 831 719
- US-A1- 2006 213 734

## Description

### TECHNICAL FIELD

The invention relates to a sealing arrangement comprising a seal, a rod and a housing, said rod is axially arranged in the housing so as to be capable of moving in a sliding manner, wherein the concentric gap located between housing and rod is closed by means of a seal at the end side, wherein the seal encompasses a sealing lip comprising at least one projection, which is arranged at the inner periphery and which rests against the rod in a sealing manner.

### STATE OF THE ART

Such sealing arrangements are often used in vibration shock absorbers, in which a rod is axially arranged in a housing so as to be capable of moving in a sliding manner. A sealing arrangement for such a use is known from DE 38 31 719 A1, where provision is made for a seal, which seals the gap between piston and housing. For this purpose, the seal encompasses a sealing lip, which rests against the rod in a sealing manner. To ensure the radial contact pressure of the sealing lip on the rod, the seal encompasses a contact ring, which rests against the sealing lip at the outer periphery. The contact ring causes a sufficient contact force, in particular at low temperatures. However, it is a disadvantage of the known seal that the production of the seal is expensive and that it still requires a relatively large installation space in the housing.

The EP 1 729 04,5 A1 shows a sealing device for a reciprocating shaft which consist of three separately arranged sealing parts connected to a washer. The sealing parts are a dust lip, a periphered lip and a sealing with a base portion with two lips, namely a main lip and an auxiliary lip. The last ones are extended radially and are acting separately. Such a device is expensive and requires an large installation space.

By the EP 0 562 439 A1 is known a seal for a reciprocating shaft which also has two radially extending lips acting separately. The seal has a guide ring which is held by a gripping part of the seal.

### DESCRIPTION OF THE INVENTION

The invention is based on the object of further developing the seal in such a manner that the required installation space of the seal is further reduced.

This object is solved by means of the features of claim 1. The subclaims make reference to advantageous embodiments.

To solve the object, the sealing lip, at its outer periphery, encompasses at least one further projection, which is in operative connection with the housing. According to the invention, the contact function by means of which the sealing lip is radially pressed against the rod is thus taken over by the housing itself. Additional contact rings are not necessary. Due to the fact that the sealing lip now rests directly against the rod and on the housing, only a minimal installation space is required, which substantially corresponds to the reach of the sealing lip itself; expansion spaces are not required. The sealing arrangement as claimed in the invention is particularly suitable for uses requiring the seal to have a temperature stability of above 100°C. This is the case, for example, when using the seal in a shock absorber for construction machinery or for vehicles, which are designed for rough road tracks. In response to such requirements, FKM is preferably used as sealing material. In comparison with NBR, this material encompasses a better temperature resistance at temperature of above 100°C, but it has inferior cold-running characteristics at low temperatures. Due to the radial displacement of the rod, a sealing lip made of FKM tends to expand and lift off at low temperatures. The reset forces are thereby so small that it is not sufficient to press the sealing lip against the rod by means of only a common annular coil spring. It was thus known from the state of the art to provide a contact ring, which is dimensioned in such a manner that the sealing lip can be prevented from lifting off. It was to be suspected that the sealing arrangement as claimed in the invention encompasses disadvantageous effects in response to a radial displacement, in particular at low temperatures, that is, that it expands and lifts off. Surprisingly, however, it was determined that the sealing, function is also in effect in response to radial displacements, in particular also at low temperatures and that the sealing lip always rests against the rod. In another embodiment, it is also possible for the further projection to be in direct operative connection with the housing. This is possible, for example, when a ring against which the further projection rests is pressed into the opening of the cover. With the use of the ring, a reworking of the contact surface, which is designed for the further projection, is no longer necessary so that the production of the sealing arrangement is simplified.

The seal can encompass a bearing ring, which extends in radial direction. This bearing ring bears on the housing and is pressed against the housing by means of a closure cover. The fact that the bearing ring is covered with an elastomeric material at least on one side simultaneously results in a static seal. A bearing ring extending in radial direction requires a small installation space. However, the seal as claimed in the invention can also be equipped with an L-shaped bearing ring.

The sealing lip can project from the bearing ring in axial direction. The flexibility of the sealing lip is thus improved in response to a slightly increased required axial installation space and the sealing lip can follow in particular radial displacements of the rod without lifting off.

Provision can be made at an end side of the bearing ring for revolving projections. The projections, which consist of a sealing material, improve the static sealing effect.

The seal can comprise a dust lip, which can axially project from the bearing ring. The axial orientation also improves the flexibility of the dust lip.

Provision can be made for at least two projections. Several projections similarly resting against the rod prevent the sealing lip from tilting in response to the translational movement of the rod, in particular in response to the shift in direction thereof.

The at least one further projection can be arranged in a different horizontal plane than the further projections. All of the projections are thus evenly pressed against the rod via the at least one further projection

The housing can comprise a cylindrical section against which the sealing lip can rest. For the most part, the rod guide, which prevents a tilting of the rod, is integrated in this cylindrical section. Due to the space-saving embodiment of the seal, more installation space remains for the embodiment of the rod guide. The seal is integrated in the housing and is fixed in the housing by means of a closure cover. The closure cover is fastened to the housing by means of recasting, for example.

### BRIEF DESCRIPTION OF THE DRAWING

Several exemplary embodiments of the sealing arrangement as claimed in the invention will be defined below by means of the figures. In each case the figures show diagrammatically:
- Fig. 1: a sealing arrangement for a shock absorber;
- Fig. 2: a sealing arrangement for a shock absorber comprising an integrated ring;
- Fig. 3 a: sealing arrangement with a sealing lip comprising two further projections.

### EMBODIMENT OF THE INVENTION

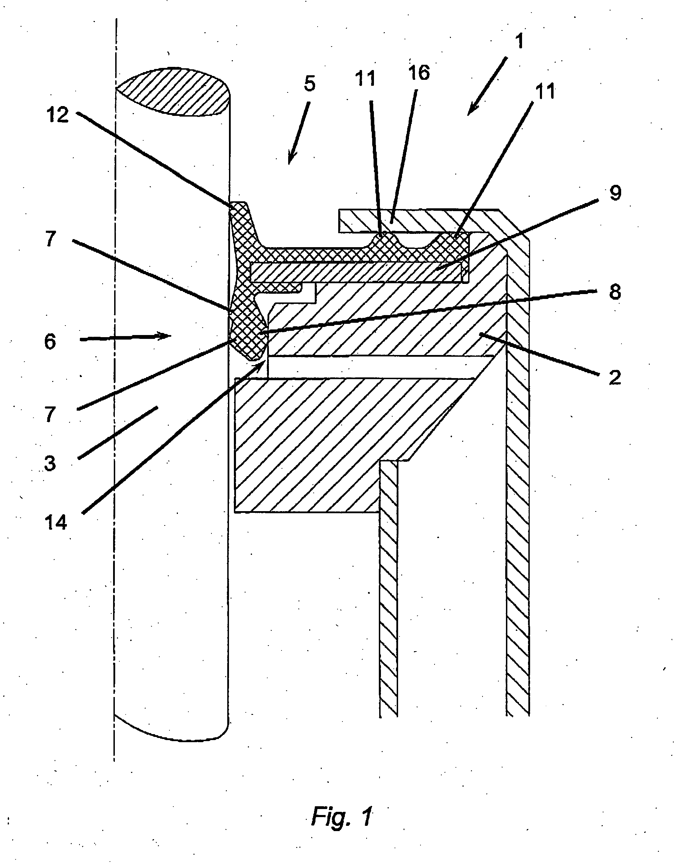

Figure 1 shows a sealing arrangement 1 for a twin-tube shock absorber, specifically for a heavy duty shock absorber in a vehicle for rough road track comprising a high temperature application spectrum: The sealing arrangement 1 is arranged in a housing 2 comprising a cylindrical inner tube, in which a rod 3 is arranged so as to be capable of moving in a sliding manner. The concentric gap 4 located between housing 2 and rod 3 is closed by means of a seal 5 at the end side, wherein the seal 5 encompasses a sealing lip 6 comprising two projections 7, which are arranged at the inner periphery and which rest against the rod 3 in a sealing manner. At its outer periphery, the sealing lip 6 further encompasses a further projection 8, which rests against the housing 2 with its outer periphery and which is thus pressed against the rod 3. The further projection 8 is thus in operative connection with the housing 2. The further projection 8 is arranged in a different horizontal plane than the two projections 7. The sealing lip 6 is fastened to a bearing ring 9, which extends in radial direction, wherein the sealing lip 6 projects from the bearing ring 9 in axial direction. Provision is made on an end side 10 of the bearing ring 9 for revolving projections 11 and the seal 5 comprises a dust lip 12, which axially projects from the bearing ring 9. The sealing lip 6, the projections 11 and the dust lip 12 are made of fluoric rubber (FKM). The housing 2 includes a cover, which comprises a cylindrical section 14 against which the sealing lip 6 rests. At its end side, the housing 2 encompasses a recess in which the seal 5. is supported. The projections 11 face a closure cover 16, which is fastened to the housing 2 in a non-positive/positive fit by means of a recasting method and which thus fixes the seal 5 in the housing 2. The cover 16 comprises a cylindrical outer tube.

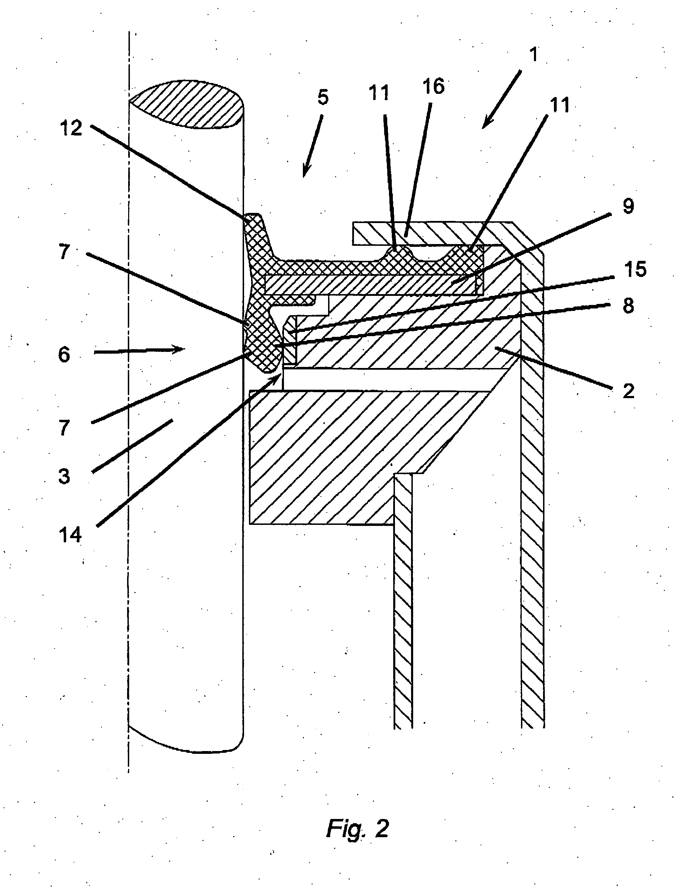

Figure 2 shows a sealing arrangement 1 according to Figure 1. In this embodiment, the outer periphery of the further projection 8 rests against a ring 15, which in turn is pressed into the housing 2. In this embodiment, the ring 15 is held in a non-positive manner in a congruent recess of the housing 2 and thus forms a part of the housing 2. The required installation space of this embodiment is identical to the required installation space of the embodiment according to Figure 1.

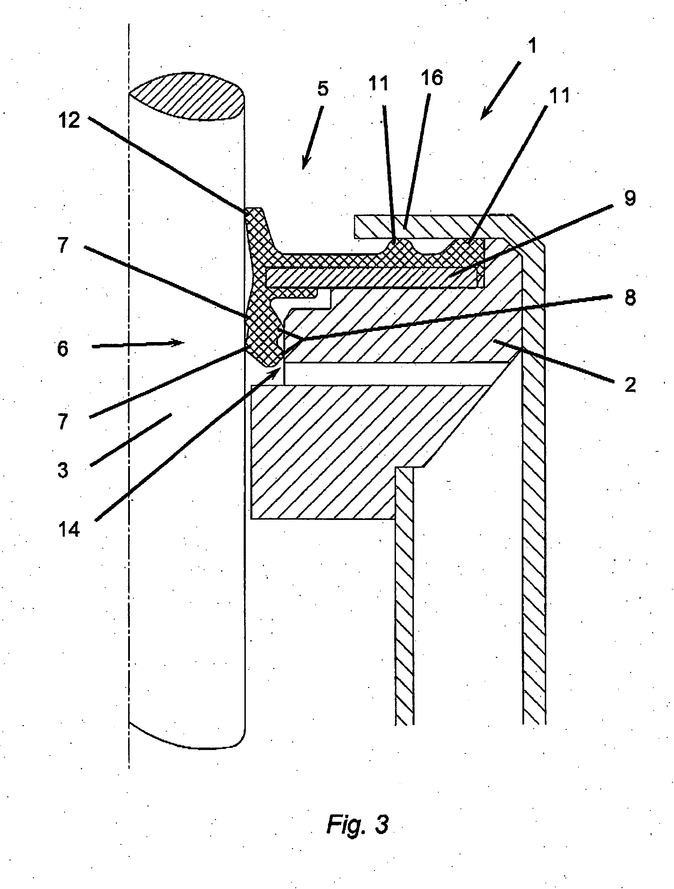

Figure 3 shows a sealing arrangement 1 according to Figure 1. In this embodiment, at its outer periphery, the sealing lip 6 further encompasses two further projections 8, which rest against the housing 2 with their outer periphery and which are thus pressed against the rod 3. The further projections 8 are thus in operative connection with the housing 2. The two further projections 8 are arranged in a different horizontal plane than the two projections 7.

## Claims

1. A sealing arrangement (1) comprising a seal (5), a rod (3) and a housing (2), said rod (3), is axially arranged in the housing (2) so as to be capable of moving in a sliding manner, the concentric gap (4) located between housing (2) and rod (3) is closed by means of a seal (5) at the end side, wherein the seal (5) encompasses a sealing lip (6) comprising at least one projection (7), which is arranged at the inner periphery and which rests against the rod (3) in a sealing manner, **characterized in that** the sealing lip (6), at its outer periphery, encompasses at least one further projection (8), which is in operative connection with the housing (2) by pressing the sealing lip (6) against the rod (3).

2. The seating arrangement according to claim 1, **characterized in that** the seal (5) encompasses a bearing ring (9), which extends in radial direction.

3. The sealing arrangement according to claim 2, **characterized in that** the sealing lip (6) projects from the bearing ring (9) in axial direction.

4. The sealing arrangement according to claim 2 or 3, **characterized in that** provision is made on an end side (10) of the bearing ring (9) for at least one revolving projection (11).

5. The sealing arrangement according to one of claims 2 to 4, **characterized in that** the seal (5) comprises a dust lip (12), which axially projects from the bearing ring (9).

6. The sealing arrangement according to one of claims 1 to 5, **characterized in that** provision is made for at least two projections (7).

7. The sealing arrangement according to one of claims 1 to 6, **characterized in that** the at least one further projection (8) is arranged in a different horizontal plane than the further projections (7).

8. The sealing arrangement according to one of claims 1 to 7, **characterized in that** the housing (2) comprises a cylindrical section (14), against which the sealing lip (6) rests.

## Patentansprüche

1. Dichtungsanordnung (1) mit einer Dichtung (5), einem Stab (3) und einem Gehäuse (2), wobei der Stab (3) axial im Gehäuse (2) angeordnet ist, damit er sich gleitend bewegen kann, wobei der zwischen dem Gehäuse (2) und dem Stab (3) angeordnete konzentrische Spalt (4) mittels einer Dichtung (5) an der Endseite geschlossen ist, wobei die Dichtung (5) eine Dichtungslippe (6) umfasst, die mindestens einen Vorsprung (7) umfasst, der am inneren Umfang angeordnet ist und am Stab (3) dichtend anliegt, **dadurch gekennzeichnet, dass** die Dichtungslippe (6) an ihrem äußeren Umfang mindestens einen weiteren Vorsprung (8) umfasst, der durch Andrücken der Dichtungslippe (6) am Stab (3) mit dem Gehäuse (2) in Wirkverbindung steht.

2. Dichtungsanordnung nach Anspruch 1, **dadurch gekennzeichnet, dass** die Dichtung (5) einen Lagerring (9) umfasst, der sich in radialer Richtung erstreckt.

3. Dichtungsanordnung nach Anspruch 2, **dadurch gekennzeichnet, dass** die Dichtungslippe (6) vom Lagerring (9) in axialer Richtung vorragt.

4. Dichtungsanordnung nach Anspruch 2 oder 3, **dadurch gekennzeichnet, dass** an einer Endseite (10) des Lagerrings (9) für mindestens einen umlaufenden Vorsprung (11) gesorgt ist.

5. Dichtungsanordnung nach einem der Ansprüche 2 bis 4, **dadurch gekennzeichnet, dass** die Dichtung (5) eine Staublippe (12) umfasst, die axial vom Lagerring (9) vorragt.

6. Dichtungsanordnung nach einem der Ansprüche 1 bis 5, **dadurch gekennzeichnet, dass** für mindestens zwei Vorsprünge (7) gesorgt ist.

7. Dichtungsanordnung nach einem der Ansprüche 1 bis 6, **dadurch gekennzeichnet, dass** der mindestens eine weitere Vorsprung (8) in einer anderen horizontalen Ebene als die weiteren Vorsprünge (7) angeordnet ist.

8. Dichtungsanordnung nach einem der Ansprüche 1 bis 7, **dadurch gekennzeichnet, dass** das Gehäuse (2) einen zylindrischen Abschnitt (14) umfasst, an dem die Dichtungslippe (6) anliegt.

## Revendications

1. Agencement d'étanchéité (1), comprenant un joint d'étanchéité (5), une tige (3) et un boîtier (2), ladite tige (3) étant agencée axialement dans le boîtier (2) de manière à pouvoir se déplacer par coulissement, l'espace concentrique (4) situé entre le boîtier (2) et la tige (3) étant fermé au moyen d'un joint d'étanchéité (5) du côté de l'extrémité, le joint d'étanchéité (5) comportant une lèvre d'étanchéité (6) comprenant au moins une saillie (7), qui est agencée à la périphérie interne et qui repose contre la tige (3) de manière hermétique, **caractérisé en ce que** la lèvre d'étanchéité (6), à sa périphérie externe, comporte au moins une saillie supplémentaire (8) qui est en liaison fonctionnelle avec le boîtier (2) en pressant la lèvre d'étanchéité (6) contre la tige (3).

2. Agencement d'étanchéité selon la revendication 1, **caractérisé en ce que** le joint d'étanchéité (5) comporte une bague de palier (9) qui s'étend dans la direction radiale.

3. Agencement d'étanchéité selon la revendication 2, **caractérisé en ce que** la lèvre d'étanchéité (6) fait saillie depuis la bague de palier (9) dans la direction axiale.

4. Agencement d'étanchéité selon la revendication 2 ou 3, **caractérisé en ce qu'**au moins une saillie rotative (11) est prévue sur un côté d'extrémité (10) de la bague de palier (9).

5. Agencement d'étanchéité selon l'une quelconque des revendications 2 à 4, **caractérisé en ce que** le joint d'étanchéité (5) comprend une lèvre anti-poussière (12) qui fait saillie axialement depuis la bague de palier (9).

6. Agencement d'étanchéité selon l'une quelconque des revendications 1 à 5, **caractérisé en ce qu'**au moins deux saillies (7) sont prévues.

7. Agencement d'étanchéité selon l'une quelconque des revendications 1 à 6, **caractérisé en ce que** l'au moins une saillie supplémentaire (8) est disposée dans un plan horizontal différent des autres saillies (7).

8. Agencement d'étanchéité selon l'une quelconque des revendications 1 à 7, **caractérisé en ce que** le boîtier (2) comprend une section cylindrique (14) contre laquelle s'appuie la lèvre d'étanchéité (6).
